# EUROPÄISCHE PATENTSCHRIFT

(11) **EP 2 000 823 B1**
(45) Veröffentlichungstag und Bekanntmachung des Hinweises auf die Patenterteilung: **18.01.2012**
(21) Anmeldenummer: 07011246.1
(22) Anmeldetag: 08.06.2007
(51) Int. Cl.: G01S 13/08, G01S 13/88, H01Q 9/16, H01Q 9/30

(54) **Zylinderdeckel mit einer Messvorrichtung zur Erfassung der Kolbenposition in einem Fluidikzylinder mit einer Mikrowellen-Koppelsonde**
Cylinder head with a measuring device for logging the piston position in a fluid cylinder using a microwave couple sensor
Couvercle d'un cylindre fluidique avec un dispositif de mesure destiné à la saisie de la position de pistons dans le cylindre fluidique doté d'une sonde de couplage à micro-ondes

(43) Veröffentlichungstag der Anmeldung: 10.12.2008
(73) Patentinhaber: FESTO AG & Co. KG, 73734 Esslingen (DE)
(72) Erfinder: Reininger, Thomas, 73249 Wernau (DE); Maier, Marcus, 70565 Stuttgart (DE); Geisbusch, Lothar, 73760 Ostfildern (DE)
(74) Vertreter: Kocher, Mark Werner

(56) Entgegenhaltungen:
- DE-A1- 10 205 904
- DE-A1- 19 833 220

## Beschreibung

Die Erfindung betrifft einen Zylinderdeckel mit einer Messvorrichtung zur Erfassung der Kolbenposition in einem Fluidikzylinder, mit einer Mikrowellen-Koppelsonde in dem Zylinderdeckel des Fluidikzylinders zur Einkopplung einer Hohlleiterwelle in den angrenzenden Zylinderraum und zur Auskopplung und Erfassung der vom Kolben reflektierten Hohlleiterwelle und mit einer Auswerteelektronik zur Auswertung der reflektierten Hohlleiterwelle.

Die Ein- beziehungsweise Auskopplung der Mikrowelle in den einen Hohlleiter darstellenden Zylinderraum stellt eine Wellentypwandlung dar. Im Bereich des HF-Frontendes, das den Mikrowellengenerator und die Hochfrequenz-Empfangselektronik enthält, liegt eine TEM-Welle vor, die sich entlang von Mikrowellenleitungen, wie Mikrostreifenleitungen oder Koaxialleitungen, bis zu einer Koppelsonde ausbreitet. Mittels dieser eine Antenne darstellende Koppelsonde wird diese TEM-Welle in die Hohlleiterwelle überführt. Es ist für die Funktion des Mikrowellen-Positionssensors von entscheidender Bedeutung, dass diese wellentypwandlung möglichst vollständig erfolgt, das heißt, dass möglichst die gesamte TEM-Welle, die zur Koppelsonde geführt wird, in die Hohlleiterwelle umgewandelt wird, sodass es nicht zu Reflexionen am Fußpunkt der Koppelsonde kommt.

Es gibt verschiedene Feldmuster, in denen sich eine Welle in einem Hohlleiter ausbreiten kann, die sogenannten Moden oder wellentypen. Für jeden Mode existiert eine kritische Frequenz, unterhalb der er nicht mehr ausbreitungsfähig ist. Diese kritische Frequenz ist von Mode zu Mode verschieden und hängt vom Durchmesser des Hohlleiters ab, das heißt vom Innendurchmesser des Fluidikzylinders. Der Mode mit der bezogen auf einen bestimmten Hohlleiterdurchmesser kleinsten kritischen Frequenz wird als Grundmode bezeichnet. Dabei handelt es sich um eine gewöhnlich als H11-Welle bezeichnete Welle, beziehungsweise um einen H11-Mode. Dieser wird in der Literatur gelegentlich auch als TE11-Welle bezeichnet. Der nächsthöhere Mode, das heißt der Mode mit der zweitkleinsten kritischen Frequenz, wird als E01-Welle beziehungsweise E01-Mode bezeichnet, der in der Literatur gelegentlich auch als TM01-Mode bezeichnet wird.

Gewöhnlich wird angestrebt, dass nur ein einziger Mode in einem Hohlleiter ausbreitungsfähig ist, da es beim gleichzeitigen Vorhandensein mehrerer Moden zu Interferenzerscheinungen kommt, das heißt, die einzelnen Moden können sich im ungünstigsten Fall gegenseitig auslöschen. Eine Abhilfe besteht darin, die Frequenz so tief zu wählen, dass nur ein einziger Mode, und zwar der Grundmode, ausbreitungsfähig ist. Dieser Grundmode wird dann zur Übertragung der Hochfrequenzenergie verwendet. Dies hat auch hinsichtlich der Kosten den Vorteil, dass dabei die tiefstmögliche Betriebsfrequenz bezogen auf einen bestimmten Hohlleiterdurchmesser verwendet werden kann.

Hinsichtlich der vorstehenden Erläuterungen erscheint es daher zunächst naheliegend, auch für einen Mikrowellen-Positionssensor den Grundmode, das heißt eine H11-Welle, zu verwenden. Bei dieser H11-Welle gibt es jedoch zwei grundsätzliche Probleme: Zum einen kann eine H11-Welle nur schwer eine Grenzschicht zwischen einem Dielektrikum und Luft überwinden. "Schwer" heißt in diesem Zusammenhang, dass nur ein Teil der Welle weiterläuft und der Rest reflektiert wird. Zum anderen tritt dieses Problem der Reflexion auch dann auf, wenn im Hohlleiter ein zentrales Hindernis auftritt.

Dies liegt darin begründet, dass bei der H11-Welle in der Mitte des Hohlleiters die größte Leistungsdichte auftritt, während dies bei der E01-Welle in den Randbereichen der Fall ist.

Aus der DE 10205904 A1 ist eine Einkoppelsonde bekannt, die als mittiger konzentrischer Monopol in Form einer Scheibe an einer Stirnseite eines Pneumatikzylinders ausgebildet ist. Häufig ist jedoch ein konzentrischer Lufteinlass und/oder eine konzentrische zylindrische Ausnehmung zur Aufnahme eines Endlagendämpfungselements an der Stirnseite des Zylinders vorgesehen, sodass die bekannte Einkoppelsonde aus der mittigen Achse heraus verschoben werden müsste. Dies würde jedoch zur Anregung von unerwünschten Moden, insbesondere des ausbreitungsfähigen Grundmodes, führen, sodass die bekannte Koppelsonde für solche Zylinder nicht verwendbar ist.

Aus der DE 198 33 220 A1 sind mehrere axialsymmetrische, als Monopole ausgebildete Koppelsonden bekannt, die im Lagerdeckel um die Kolbenstange herum gruppiert sind.

Eine Aufgabe der vorliegenden Erfindung besteht darin, einen Zylinderdeckel mit einem Mikrowellen-Positionssensor, der eineKoppelsonde umfasst, zu schaffen, die außerhalb der konzentrischen Mitte eines Zylinderdeckels angeordnet ist und durch die dennoch nur ein einziger Hohlleiterwellentyp erzeugbar ist.

Diese Aufgabe wird erfindungsgemäß mit den Merkmalen des Anspruchs 1 gelöst.

Der erfindungsgemäße zylinderdeckel mit einer aus zwei sich in entgegengesetzte radiale Richtungen erstreckenden Monopolen bestehenden Koppelsonde hat insbesondere den Vorteil, dass sich infolge des metallischen Stegs als Hindernis die erzeugte E01-Welle in zwei symmetrische H10-Wellen umwandelt. Beide H10-Wellen in den z.B. halbkreisförmigen Hälften zusammen genommen weisen eine ähnliche Verteilung des elektrischen Feldes an der Grenzfläche zum freien Hohlleiter wie der dort vorherrschende E01-Wellentyp auf, so dass ein reflexionsfreier Übergang zwischen den Wellentypen möglich ist. Durch die beiden Dielektrika, in denen die beiden Monopole angeordnet sind, wird die kritische Frequenz der maßgeblichen H10-Hohlleitermoden verkleinert und die auf die jeweilige Hohlleiterwellenlänge bezogene Länge des Hohlleiters vergrößert. Dies führt zu einer kompakten Bauweise. Der metallische Steg kann relativ breit sein und beispielsweise dazu dienen, Befestigungsschrauben, fluidische Zu- und/oder Abführungen und eine zylindrische Ausnehmung als Bestandteil einer Endlagendämpfungs-Anordnung aufzunehmen. Der metallische Steg schließt in einen konzentrischen.zylindrischen Hohlraum ein, ohne dass dies die Wellenausbreitung beeinträchtigen würde und ohne dass unerwünschte Moden erzeugt würden. Dieser zylindrische Hohlraum ist als fluidische Versorgungsleitung zum Zylinderraum und/oder als Aufnahme für ein mit dem Kolben verbundenes zylindrisches Endlagendämpfungsglied ausgebildet.

Durch die in den Unteransprüchen aufgeführten Maßnahmen sind vorteilhafte Weiterbildungen und Verbesserungen des im Anspruch 1 angegebenen Zylinderdeckels möglich.

Es ist auch möglich, auf festes dielektrisches Material als Dielektrikum ganz oder teilweise zu verzichten, so dass die Monopole in ganz oder teilweise luftgefüllten Kavitäten angeordnet wären, wobei die Luft dann ebenfalls als Dielektrikum dient. Wenn die Monopole zur Erzeugung eines inhomogenen Verlaufs der Dielektrizitätszahl nicht oder überwiegend nicht in festem dielektrischen Material angeordnet sind, werden die Kavitäten zweckmäßigerweise zum Schutz gegen Schmutzablagerungen o.ä. durch festes dielektrisches Material beispielsweise in Form einer dünnen Platte zum zylinderraum hin abgeschlossen.

Die beiden Dielektrika besitzen in einer vorteilhaften konstruktiven Ausgestaltung jeweils die geometrische Gestalt eines Zylinderabschnitts oder Hohlzylinderabschnitts und sind vorzugsweise spiegelsymmetrisch zum metallischen Steg angeordnet. Durch eine ca. ¼-Hohlleiterwellenlänge messende Ausdehnung der Dielektrika in Ausbreitungsrichtung wird der Kurzschluss der durch den Zylinderdeckel metallisch begrenzten Rückwand der Dielektrika am Ort des Monopols in einen ungefähren Leerlauf transformiert. Die Dielektrika sind in entsprechend geformten, zum Zylinderraum hin offenen Ausnehmungen des metallischen Zylinderdeckels angeordnet und können zusätzlich als Kolbenanschlag dienen.

Die beiden Monopole sind zweckmäßigerweise an ihrem radial inneren Ende über Streifenleitungen oder Koaxialleitungen mit des Auswerteelektronik verbunden. Diese kann bevorzugt am oder im Zylinderdeckel angeordnet sein, oder es befinden sich Anschlüsse für externe Koaxialkabel am Zylinderdeckel zur Verbindung mit einer externen Auswerteelektronik.

Zur idealen Anregung des E01-Wellentyps werden die Monopole gleichphasig gespeist, wobei die Fußpunktspannungen nicht nur bezüglich der Phase, sondern auch bezüglich des Betrags identisch sind. Obwohl beim H11-Grundmode keine reflexionsarme Einkopplung der Hohlleiterwelle möglich ist, kann es im Einzelfall von Vorteil sein, die alleinige Anregung des H11-Grundmodes durch eine exakt gegenphasige Anregung der Monopole zu erzwingen. Hierzu sind vorzugsweise Mittel zur Umschaltung auf eine gegenphasige Einspeisung vorgesehen, wobei dann die Auswerteelektronik Mittel zur Auswertung beider Wellenarten zum Zwecke der Positionsbestimmung aufweist.

Ausführungsbeispiele der Erfindung sind in der Zeichnung dargestellt und in der nachfolgenden Beschreibung näher erläutert. Es zeigen:
- Figur 1: eine Querschnittsdarstellung eines Zylinderdeckels mit zwei symmetrisch angeordneten Dielektrika in Gestalt von Zylinderabschnitten, die durch einen breiten Metallsteg mit einem zylindrischen Hohlraum zur Aufnahme eines Endlagendämpfungsglieds voneinander getrennt sind,
- Figur 2: dieselbe Anordnung in Verbindung mit einer Teildarstellung eines Zylinders im Längsschnitt,
- Figur 3: eine ähnliche Anordnung wie Figur 1 mit einem sehr schmalen metallischen Steg und
- Figur 4: eine ähnliche Anordnung wie Figur 1 mit einem breiten metallischen Steg, der lediglich einen fluidischen Versorgungskanal enthält.

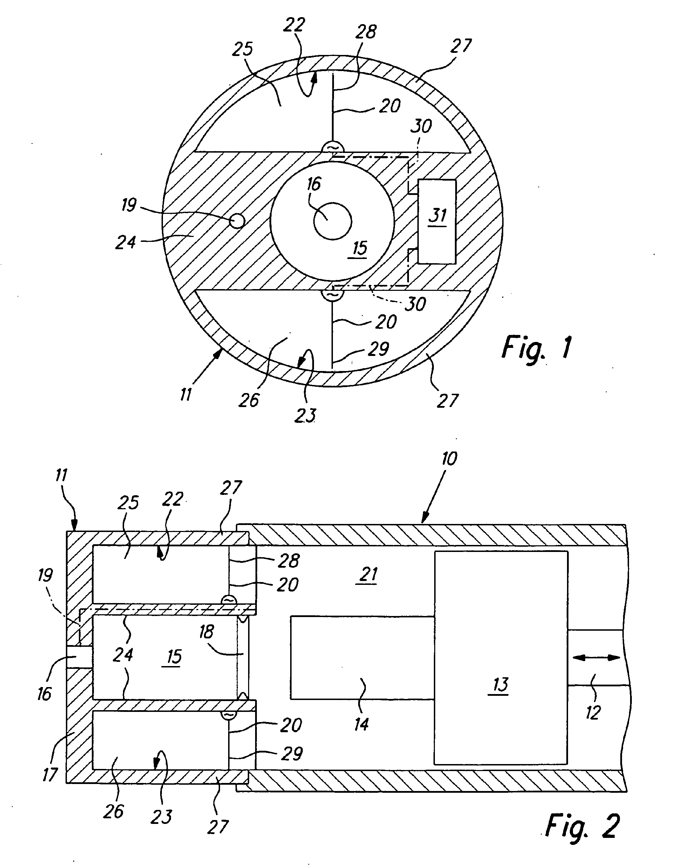

Bei dem in den Figuren 1 und 2 dargestellten ersten Ausführungsbeispiel ist ein Fluidikzylinder 10 am einen dargestellten Endbereich mit einem Zylinderdeckel 11 versehen. Ein mit einer Kolbenstange 12 versehener Kolben 13 ist im Fluidikzylinder 10 verschiebbar geführt. Am nicht dargestellten zweiten Endbereich ist die Kolbenstange 12 durch einen dort angeordneten zweiten Zylinderdeckel hindurchgeführt.

Der Kolben 13 weist an seiner von der Kolbenstange 12 entfernten Stirnseite ein zylindrisches Endlagendämpfungsglied 14 auf, das zur Endlagendämpfung in eine entsprechend geformte zylindrische Aufnahme 15 im Zylinderdeckel 11 eintaucht. Ein konzentrischer Verbindungskanal 16 in der Endabschlusswandung 17 des Zylinderdeckels 11 dient zur Zuführung und Ableitung von Fluid und dadurch zur Steuerung des Kolbens 13. Erreicht das Endlagendämpfungsglied 14 die an der Mündung mit einer Ringdichtung 18 versehene zylindrische Aufnahme 15, so kann das Fluid nicht mehr durch diese Aufnahme 15 abgeleitet werden, sondern muss durch eine strichpunktiert dargestellte Bypass-Leitung 19 mit wesentlich geringerem Querschnitt abgeführt werden. Hierdurch wird die Dämpfungswirkung erzielt.

Zur Erfassung der Position des Kolbens 13 ist eine als Mikrowellen-Sensor ausgebildete Messvorrichtung im Zylinderdeckel 11 angeordnet. Diese sendet eine Mikrowelle mit Hilfe einer Koppelsonde 20 in den als Hohlleiter wirkenden Zylinderraum 21, wobei diese am Kolben 13 reflektiert und die reflektierte Welle wieder in die Koppelsonde 20 eingekoppelt wird. Bei dieser auch aus dem eingangs angegebenen Stand der Technik bekannten Messmethode wird zumindest indirekt die Laufzeit ausgewertet und daraus die Position des Kolbens 13 abgeleitet beziehungsweise bestimmt.

In zwei zylinderabschnittförmigen Hohlräumen 22, 23, die spiegelsymmetrisch zu einem breiten mittleren Steg 24 angeordnet sind, befinden sich zwei entsprechend geformte Dielektrika 25, 26. Die beiden Dielektrika 25, 26 befinden sich somit jeweils zwischen dem mittleren Steg 24 und einem Umfangswandungsbereich 27 des Zylinderdeckels 11. Dieser besteht einschließlich des einstückig damit verbundenen Stegs 24 aus Metall, beispielsweise aus Aluminium oder einer Aluminiumlegierung.

Die Koppelsonde 20 wird durch zwei Monopole 28, 29 gebildet, die radial und zueinander fluchtend zu beiden Seiten des Stegs 24 in den beiden Dielektrika 25, 26 angeordnet sind. Die beiden Fußpunkte der Monopole 28, 29 am Steg 24 sind über beispielsweise als Streifenleitungen (Microstrip-Leitungen) oder Koaxialleitungen ausgebildete Leitungen 30 an eine Auswerteelektronik 31 angeschlossen, die ebenfalls im Zylinderdeckel 11 angeordnet ist. Diese Auswerteelektronik 31 enthält einen Leistungsteiler zur Erzeugung sowohl hinsichtlich des Betrags als auch der Phase identischen Mikrowellensignalen für die Monopole 28, 29. Diese Auswerteelektronik 31 enthält auch den zur Erzeugung der Mikrowellensignale erforderlichen Mikrowellengenerator, wobei dieser auch separat davon angeordnet sein kann.

Es ist auch möglich, auf festes dielektrisches Material als Dielektrikum 25, 26 ganz oder teilweise zu verzichten, so dass die Monopole 28, 29 in ganz oder teilweise luftgefüllten Kavitäten angeordnet wären, wobei die Luft dann ebenfalls als Dielektrikum 25, 26 dient. Wenn die Monopole 28, 29 zur Erzeugung eines inhomogenen, insbesondere sprunghaften Verlaufs der Dielektrizitätszahl des Dielektrikums 25, 26 nicht oder überwiegend nicht in festem dielektrischen Material sondern in einem Fluid oder in einem Vakuum angeordnet sind, werden die Kavitäten zweckmäßigerweise zum Schutz gegen Schmutzablagerungen o.ä. in nicht dargestellter Weise durch festes dielektrisches Material beispielsweise in Form einer dünnen Platte zum Zylinderraum hin abgeschlossen.

Die Auswerteelektronik 31 mit dem Mikrowellengenerator kann auch außen am Zylinderdeckel 11 oder völlig separat davon angeordnet sein. In diesem Falle werden die Leitungen 30 zu entsprechenden Anschlüssen an der Außenseite des Zylinderdeckels 11 geführt, an die dann externe Koaxialleitungen angeschlossen werden können.

Von der Auswerteelektronik 31 aus werden Mikrowellensignale als TEM-Wellen über die Leitungen 30 den Monopolen 28, 29 zugeführt, von wo aus sie als E01-Welle in den Zylinderraum 21 ausgekoppelt werden. In den Dielektrika 25 und 26 herrscht dabei der H10-Hohlleiter-Wellentyp vor. Nach der Reflexion am Kolben 13 werden sie wieder in die Monopole 28, 29 eingekoppelt und der Auswerteelektronik 31 zur Auswertung und zur Positionsbestimmung des Kolbens 13 zugeführt.

Es kann sich als zweckmäßig erweisen, in der Auswerteelektronik 31 noch eine Umschaltvorrichtung vorzusehen, durch die abwechselnd gleichphasige und gegenphasige Wellen den Monopolen 28, 29 zugeführt werden. Bei einer gegenphasigen Zuführung wird eine H11-Welle im Zylinderraum 21 erzeugt. Die Auswertung dieser H11-Welle kann zu einer noch genaueren Positionsbestimmung beitragen.

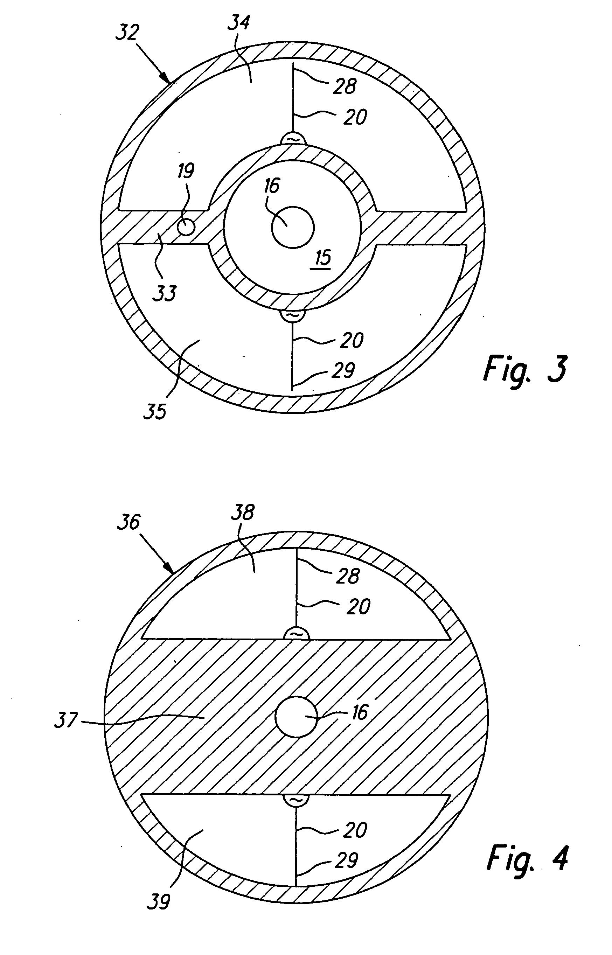

Bei dem in Figur 3 dargestellten zweiten Ausführungsbeispiel ist der Zylinderdeckel 11 mit relativ breitem Steg 24 durch einen Zylinderdeckel 32 mit relativ schmalem Steg 33 ersetzt. Der schmale Steg 33 umgreift dabei die zylindrische Aufnahme 15 rohrförmig. Das zweite Ausführungsbeispiel soll zeigen, dass die Breite des Stegs in relativ starkem Maße variiert werden kann, ohne dass dies die Erzeugung der gewünschten Mikrowelle in unerwünschtem Maße beeinträchtigt. Die übrigen Bereiche und Positionen gemäß Figur 3 sind mit denselben Bezugszeichen wie beim ersten Ausführungsbeispiel versehen und nicht nochmals beschrieben.

Infolge des schmalen Stegs 33, der die zylindrische Aufnahme 15 umgreift, erhalten die beiden Dielektrika 34, 35 eine hohlzylinderabschnittförmige Gestalt.

Bei dem in Figur 4 dargestellten dritten Ausführungsbeispiel ist ein Zylinderdeckel 36 ohne zylindrische Aufnahme 15, das heißt ohne entsprechende Endlagendämpfungseinrichtung, dargestellt. Durch den relativ breiten Steg 37 verläuft daher lediglich der konzentrische Verbindungskanal 16 zur Zuführung und Abführung von Fluid. Da der Zylinderdeckel 36 keine zylindrische Aufnahme zur Endlagendämpfung besitzt, kann seine Tiefe beziehungsweise Länge geringer als die der anderen Ausführungsbeispiele gewählt werden. Hierdurch verringert sich entsprechend die Länge der bei diesem Ausführungsbeispiel, wie beim ersten Ausführungsbeispiel, zylinderabschnittförmigen Dielektrika 38, 39. Auch bei diesem Ausführungsbeispiel kann die Breite des Stegs 37 stark variieren und auch wesentlich schmäler gewählt werden.

Die beiden Dielektrika 25, 26 gemäß Figur 2 stehen axial geringfügig über den Steg 24 vor und dienen zusätzlich als Anschlag für den Kolben 13. Dies ist jedoch nicht zwingend.

## Patentansprüche

1. Zylinderdeckel eines Fluidikzylinders (10) mit einer Messvorrichtung zur Erfassung der Kolbenposition in dem Fluidikzylinder (10) und einer Mikrowellen-Koppelsonde (20) in dem Zylinderdeckel (11; 32; 36) des Fluidikzylinders (10) zur Einkopplung einer Hohlleiterwelle in den angrenzenden Zylinderraum (21) und zur Auskopplung und Erfassung der vom Kolben (13) reflektierten Hohlleiterwelle und mit einer Auswerteelektronik (31) zur Auswertung der reflektierten Hohlleiterwelle, **dadurch gekennzeichnet, dass** die Koppelsonde (20) durch zwei sich in entgegengesetzte radiale Richtungen des Zylinderdeckels (11; 32; 36) erstreckende Monopole (28, 29) gebildet wird, die jeweils in einem Dielektrikum (25, 26; 34, 35; 38, 39) durch einen metallischen Steg (24; 33; 37) voneinander getrennt sind, der einen konzentrischen zylindrischen Hohlraum einschließt, der als fluidische zugangsleitung (16) zum Zylinderraum (21) und/oder als Aufnahme (15) für ein mit dem Kolben (13) verbundenes zylindrisches Endlagendämpfungsglied (14) ausgebildet ist.

2. Zylinderdeckel nach Anspruch 1, **dadurch gekennzeichnet, dass** die Dielektrika (25, 26; 34, 35; 38, 39) aus einem festen dielektrischen Material und/oder einem Fluid und/oder einem Vakuum gebildet werden.

3. Zylinderdeckel nach Anspruch 2, **dadurch gekennzeichnet, dass** die Monopole (28, 29) zur Erzeugung eines inhomogenen Verlaufs der Dielektrizitätszahl nicht oder überwiegend nicht
in festem dielektrischen Material angeordnet sind, und dass festes dielektrisches Material am Übergangsbereich zum zylinderraum (21) angeordnet ist.

4. Zylinderdeckel nach einem der vorhergehenden Ansprüche, **dadurch gekennzeichnet, dass** die beiden Dielektrika (25, 26; 34, 35; 38, 39) die geometrische Gestalt eines Zylinderabschnitts oder Hohlzylinderabschnitts besitzen und vorzugsweise spiegelsymmetrisch zum metallischen Steg (24; 33; 37) angeordnet sind.

5. zylinderdeckel nach einem der vorhergehenden Ansprüche, **dadurch gekennzeichnet, dass** die Dielektrika (25, 26; 34, 35; 38, 39) in entsprechend geformten, zum zylinderraum (21) hin offenen Ausnehmungen (22, 23) des metallischen Zylinderdeckels (11; 32; 36) angeordnet sind.

6. Zylinderdeckel nach einem der vorhergehenden Ansprüche, **dadurch gekennzeichnet, dass** die beiden Monopole (28, 29) an ihrem radial inneren Fußpunkt über Streifenleitungen oder Koaxialleitungen (30) mit der Auswerteelektronik (31) verbunden sind.

7. Zylinderdeckel nach einem der vorhergehenden Ansprüche, **dadurch gekennzeichnet, dass** die Auswerteelektronik (31) am oder im Zylinderdeckel (11) angeordnet ist, oder dass am Zylinderdeckel Anschlüsse für externe Koaxialkabel zur Verbindung mit einer externen Auswerteelektronik vorgesehen sind.

8. Zylinderdeckel nach einem der vorhergehenden Ansprüche, **dadurch gekennzeichnet, dass** die Monopole (28, 29) zur Erzeugung von E01-Mode-Wellen gleichphasig gespeist werden, insbesondere mit identischen Amplituden.

9. Zylinderdeckel nach Anspruch 8, **dadurch gekennzeichnet, dass** Mittel zur Umschaltung auf gegenphasige Einspeisung zur Erzeugung von H11-Mode-Welle vorgesehen sind, und dass die Auswerteelektronik (31) Mittel zur Auswertung beider Wellenarten zum zwecke der Positionsbestimmung aufweist.

10. Zylinderdeckel einem der vorhergehenden Ansprüche, **dadurch gekennzeichnet, dass** die Auswerteelektronik (31) einen Mikrowellengenerator enthält oder mit einem solchen verbunden ist.

## Claims

1. Cylinder cover of a fluidic cylinder (10) with a measuring device for detection of the piston position in the fluidic cylinder (10) and a microwave-coupling probe (20) in the cylinder cover (11; 32; 36) of the fluidic cylinder (10) for feeding a hollow-conductor wave into the adjacent cylinder chamber (21) and for decoupling and detecting the hollow- conductor wave reflected from the piston (13) and with evaluation electronics (31) for analysing the reflected hollow-conductor wave, **characterised in that** the coupling probe (20) is formed by two monopoles (28, 29) extending in opposite radial directions of the cylinder cover (11; 32; 36), each separated from the other in a dielectric (25, 26; 34, 35; 38, 39) by a metallic rib (24; 33; 37) which encloses a concentric cylindrical cavity which is designed as a fluidic inlet line (16) to the cylinder chamber (21) and/or as a location (15) for a cylindrical end position damping element (14) connected to the piston (13).

2. Cylinder cover according to claim 1, **characterised in that** the dielectrics (25, 26; 34, 35; 38, 39) are formed by a solid dielectric material and/or a fluid and/or a vacuum.

3. Cylinder cover according to claim 2 **characterised in that** the monopoles (28, 29), to produce an inhomogeneous course of the dielectric constant, are not or mainly not located in solid dielectric material, and that solid dielectric material is provided at the transition zone to the cylinder chamber (21).

4. Cylinder cover according to any of the preceding claims, **characterised in that** the two dielectrics (25, 26; 34, 35; 38, 39) have the geometrical shape of a cylinder section or hollow cylinder section and are preferably arranged with mirror-symmetry to the metallic rib (24; 33; 37).

5. Cylinder cover according to any of the preceding claims, **characterised in that** the dielectrics (25, 26; 34, 35; 38, 39) are provided in suitably formed recesses (22, 23) of the metal cylinder cover (11; 32; 36) which are open towards the cylinder chamber (21).

6. Cylinder cover according to any of the preceding claims, **characterised in that** the two monopoles (28, 29) are connected at their radial inner base to the evaluation electronics (31), by strip lines or coaxial lines (30).

7. Cylinder cover according to any of the preceding claims, **characterised in that** the evaluation electronics (31) are located on or in the cylinder cover (11), or that connections for external coaxial cables to connect with external evaluation electronics are provided on the cylinder cover.

8. Cylinder cover according to any of the preceding claims, **characterised in that** the monopoles (28, 29) are fed in equal-phase, in particular with identical amplitudes, to generate E01 mode waves.

9. Cylinder cover according to claim 8, **characterised in that** means are provided for switching to power supply in phase-opposition to generate H11 mode waves, and that the evaluation electronics (31) have means of analysing both wave types for the purposes of position determination.

10. Cylinder cover according to any of the preceding claims, **characterised in that** the evaluation electronics (31) contain or are connected to a microwave generator.

## Revendications

1. Couvercle d'un cylindre fluidique (10) avec un dispositif de mesure destiné à la saisie de la position de pistons dans le cylindre fluidique (10) et une sonde de couplage à micro-ondes (20) dans le couvercle (11 ; 32 ; 36) du cylindre fluidique (10) pour injecter une onde de guide d'ondes dans l'espace de cylindre (21) contigu et pour éjecter et saisir l'onde de guide d'ondes réfléchie par le piston (13) et avec une électronique d'évaluation (31) destinée à évaluer l'onde de guide d'ondes réfléchie, **caractérisé en ce que** la sonde de couplage (20) est formée par deux monopôles (28, 29) s'étendant dans des sens radiaux opposés du couvercle (11 ; 32 ; 36), lesquels sont séparés respectivement dans un diélectrique (25, 26 ; 34, 35 ; 38, 39) par une nervure métallique (24 ; 33 ; 37) qui forme un espace creux cylindrique concentrique qui est réalisé comme une conduite d'accès fluidique (16) à l'espace de cylindre (21) et/ou comme un logement (15) pour un organe d'amortissement de position finale (14) cylindrique relié au piston (13).

2. Couvercle selon la revendication 1, **caractérisé en ce que** les diélectriques (25, 26 ; 34, 35 ; 38, 39) sont constitués d'un matériau diélectrique solide et/ou d'un fluide et/ou d'un vide.

3. Couvercle selon la revendication 2, **caractérisé en ce que** les monopôles (28, 29) ne sont pas ou surtout pas disposés pour la génération d'un tracé non homogène du nombre de diélectriques dans un matériau diélectrique solide, et **en ce que** du matériau diélectrique solide est disposé sur la zone de transition à l'espace de cylindre (21).

4. Couvercle selon l'une quelconque des revendications précédentes, **caractérisé en ce que** les deux diélectriques (25, 26 ; 34, 35 ; 38, 39) possèdent la forme géométrique d'une section de cylindre ou d'une section de cylindre creux et sont disposés de préférence de manière symétrique à la nervure métallique (24 ; 33 ; 37).

5. Couvercle selon l'une quelconque des revendications précédentes, **caractérisé en ce que** les diélectriques (25, 26 ; 34, 35 ; 38, 39) sont disposés dans des évidements (22, 23) ouverts vers l'espace de cylindre (21), formés en conséquence du couvercle de cylindre (11 ; 32 ; 36) métallique.

6. Couvercle selon l'une quelconque des revendications précédentes, **caractérisé en ce que** les deux monopôles (28, 29) sont reliés sur leur base radialement intérieure par des lignes à bande ou conduites coaxiales (30) à l'électronique d'évaluation (31).

7. Couvercle selon l'une quelconque des revendications précédentes, **caractérisé en ce que** l'électronique d'évaluation (31) est disposée sur ou dans le couvercle de cylindre (11) ou **en ce que** des raccords pour des câbles coaxiaux externes sont prévus sur le couvercle pour la liaison avec une électronique d'évaluation externe.

8. Couvercle selon l'une quelconque des revendications précédentes, **caractérisé en ce que** les monopôles (28, 29) sont alimentés en phase pour la génération d'ondes de mode E01, en particulier avec des amplitudes identiques.

9. Couvercle selon la revendication 8, **caractérisé en ce que** des moyens de commutation à une alimentation en opposition de phase sont prévus pour la génération d'ondes de mode H11, et **en ce que** l'électronique d'évaluation (31) présente des moyens d'évaluation des deux types d'onde à des fins de détermination de position.

10. Couvercle selon l'une quelconque des revendications précédentes, **caractérisé en ce que** l'électronique d'évaluation (31) contient un générateur de micro-ondes ou est reliée à un tel générateur.
